# EUROPEAN PATENT APPLICATION

(11) **EP 4 389 715 A1**
(43) Date of publication of application: **26.06.2024**
(21) Application number: 22215296.9
(22) Date of filing: 21.12.2022
(51) Int. Cl.: C04B 20/00, C04B 28/04, D01F 6/04, D21H 13/14, C04B 111/28

(54) **FIBER CEMENT PRODUCT AND MANUFACTURING THEREOF**

(71) Applicant: Etex Services NV, 1880 Kapelle-op-den-Bos (BE)
(72) Inventor: MOUSSAIF, Noureddin, 1880 Kapelle-op-den-Bos (BE); DE LHONEUX, Benoit, 5000 Namur (BE); LEEMANS, Raymond, 1860 Meise (BE)
(74) Representative: Etex Services NV - Etex IPSC

(57) **Abstract**

The fiber cement product comprising a fiber cement composition comprising cement, fibers and fibrids, wherein said fibrids comprise at least one inorganic filler. The fibrids are fibrillated fibrids and are part of a synthetic wood pulp. The synthetic wood pulp comprising fibrillated fibrids comprising an inorganic filler and having a specific surface area of at least 11 m2/g, as measured by N2-adsorption according to BET method, and preferably having a specific surface area in the range of 12-20 m2/g.

## Description

### FIELD OF THE INVENTION

The invention relates to a fiber cement product comprising a fiber cement composition comprising cement, fibers and fibrillated microfibers. The invention further relates to a manufacturing method thereof.

The invention furthermore relates to fibrillated microfibers and a method of manufacturing thereof.

### BACKGROUND OF THE INVENTION

Such a fiber cement product is well-known and have been manufactured for more than a century, after that the Austrian Ludwig Hatschek invented an effective manufacturing method - currently known as the Hatschek process - and licensed this to several companies. The fiber cement products are primarily in the form of sheets, that may be planar, corrugated and of which the dimensions may vary. Their key use is as a building material. Fiber cement products are applied as structural flooring (indoor), façade panels (outdoor), roofing and flooring, floor decking applications.

Fiber cement products comprise fibers, cement and additives. Traditionally fibers were asbestos fibers, but this has been replaced by other fibers, which typically are cellulose fibers and/or synthetic fibers, such as polyvinyl alcohol fibers and polypropylene fibers. Glass fibers and/or basalt fibers may alternatively or additionally be used. It is the combination of fibers and cement into a green sheet that is subsequently cured, which provides desired flexural strength to fiber cement.

Additionally, fiber cement products may contain fibrids, such as polyolefinic fibrids, for instance in an amount of 0.1-3 weight% based on dry weight of the composition. Such fibrids, also referred to as synthetic wood pulp, have a large specific surface area and a low bulk density. This contributes to reducing pore size and may improve mechanical properties of the fiber cement. Additionally, such fibrids may provide a decorative effect to fiber cement products such as panels for façades. One way of generating such fibrids disclosed in US3,920,508 and EP0107382, and involves flashing of a polymer emulsion. The polymer, typically a polyolefin, is brought into an emulsion of water and a solvent by means of a dispersing agent, in such a manner that the water is the continuous phase in the mixture. The mixture is then brought through a nozzle to form an aqueous slurry of fibrous polyolefin that is thereafter refined by disc refiners to obtain discrete fibrids. The fibrids created by the shearing action are distributed along the length of the fiber and have a length to width ratio of about 2 to about 100 with diameters of less than 1 µm. Alternative methods for generating fibrids, i.e. small fibrous branched structures of very low diameter, are known such as flash-spinning. It is furthermore known to generate split a cast film into fibrils (a process known as fibrillation). The resulting fibrils may then be refined to render them suitable for a desired use. One major application is papermaking. In the following the term 'fibrid' will be used for describing fibrous material, comprising branched structures of microscopic diameters and having a large specific surface area (as compared to ordinary fibers), regardless of its manufacturing method. Where reference is made to 'fibrillated fibrids', these are fibrids being generated by means of refinement of fibrils, typically using disc refiners. The term 'synthetic wood pulp' is used to refer to a set (or composition) of these fibrids.

Beyond having sufficient strength, building materials such as fiber cement panels further must be sufficiently fire resistant. Recent fires in high towers with disastrous consequences have emphasized the importance of fire resistance, both for the individual materials as for the manner of assembly. The critical ingredient in fiber cement is clearly its fibers, as the cement is inorganic material and hence not combustible. However, a reduction in fiber content also leads to an unexpectable reduction in flexural strength and other mechanical properties.

### SUMMARY OF THE INVENTION

It is therefore an object of the invention to provide a fiber cement product with improved fire resistance.

It is another object to provide a manufacturing method thereof.

It is a further object to provide improved synthetic wood pulp and the preparation thereof.

According to a first aspect, the invention relates to a fiber cement product comprising a fiber cement composition comprising cement, fibers and fibrids, wherein said fibrids comprise at least one inorganic filler.

According to a second aspect, the invention relates to the use of synthetic wood pulp including fibrids comprising at least one inorganic filler in the manufacture of a fiber cement product.

According to a third aspect, the invention relates to a method of manufacturing a fiber cement product comprising the steps of:
(a) Providing synthetic wood pulp including fibrids comprising at least one inorganic filler
(b) Preparing a fiber cement composition comprising fiber, cement and said fibrids comprising at least one inorganic filler
(c) Generating an uncured fiber cement sheet using a fiber cement manufacturing technology
(d) Optionally shaping and/or compressing said uncured fiber cement sheet
(e) Curing said uncured fiber cement sheet into a fiber cement product

According to a further aspect, the invention relates to a method of preparation of synthetic wood pulp including fibrids, comprising the steps of:
- extrusion of resin filled with an inorganic filler into a film;
- fibrillation of the extruded film into fibrils, and
- Refinement of at least part of the fibrils with at least one disc refiner into fibrids to obtain said synthetic wood pulp.

According to again a further aspect, the invention relates to synthetic wood pulp including fibrids comprising at least one inorganic filler, wherein said synthetic wood pulp has a specific surface area of at least 11 m²/g, and preferably less than 30 m²/g, such as less than 20 m²/g, for instance in the range of 12 to 18 m²/g, as measured by nitrogen adsorption based on the BET-isotherm.

Tests performed on fiber cement products comprising such fibrids comprising an inorganic filler have surprisingly shown that the fire resistance of the fiber cement products improves. Such improved fire resistance is not just due to a reduction of organic content per unit mass of synthetic wood pulp. It was found surprisingly that the fire resistance also may improve without decrease of the organic content in the fiber cement product. The mechanical properties of the fiber cement products did not deterioriate. Data obtained from samples processed on a pilot line indicate that the flexural strength SMOR remains the same and the maximum breaking energy (IMOR, J/m²) may decrease somewhat and particularly when measured in air-dry conditions. The E-modulus tends to increase slightly. Variations are however within 10%. The density tends to decrease and the porosity tends to increase a few per cent (max 5%).

In the context of the invention, the presence of at least one inorganic filler in the fibrid means that the filler is incorporated into the fibric material during its manufacture. Preferably, the fibrid is a fibrillated fibrid, and the at least one inorganic filler has been incorporated into the polymeric material in an extrusion step prior to fibrillation. This method was found to be effective, leading to a uniform distribution of the filler. More preferably, a mixture of the inorganic filler and polymer material is provided in a concentrated form, as a so-called masterbatch, which is thereafter diluted by addition of further polymeric material prior or during an extrusion step.

In an advantageous embodiment, the inorganic filler is a carbonate, a silicate, a sulphate or a mixture thereof. Typical examples include CaCO3, MgCO3, Na2CO3, CaSiO4, CaSO4, such as gypsum, etc. The CaSiO4 may be provided in one of known forms including xonotlite, tobermorite, CSH-gel, vermiculite and the like. Fillers comprising an alkaline earth metal are deemed preferable. These materials are similar or identical to inorganic ingredients of the fiber cement, which may turn out beneficial for the development of the fiber cement product, particularly during the curing process. Furthermore, the visual performance of CaCO3 has been found positive. Still, alternative fillers such as oxides, for instance CaO, MgO, SiO2, TiO2 are not excluded. The inorganic filler may be provided in any form, such as a crystalline or amorphous form. Typically, it is provided in powdered form and dispersed into the polymer material. Hence the amorphous form will prevail.

In a further embodiment, the amount of filler is roughly between 20% and 70% based on the total weight of the fibrids, and hence on the total dry weight of a synthetic wood pulp. Below 20%, the effect on fire retardancy is expected to be small, filling above 70% becomes difficult. Very good results have been obtained within the range of 40-60 % filler, such as in the range of 45-55%, for instance 50%.

In again a further embodiment, the inorganic filler is used in an average particle size of less than 2µm, more preferably less than 1.5 µm or even less than 1.0µm. For sake of clarity, the average particle size as referred herein is median (50% by weight), such as indicated by suppliers in datasheets. In one implementation, the particulate inorganic filler has a median (50% by weight) in the range of 0.70 to 1.0 µm. The d10 (10% of particles by weight) is for instance in the range of 0.20 to 0.50 µm. For instance, use can be made of an inorganic particulate material that has a d98 of 5 µm, i.e. wherein 98 weight% of the inorganic material has a particle size of less than 5 micrometer. The d90 value (i.e. 90 weight% of inorganic material has a smaller particle size than the d90 value) is for instance in the range of 1.5 to 2.0 µm. Such a small particle size is deemed beneficial to obtain a homogeneous distribution of the material through the fibrils from which the fibrillated fibrids can be generated.

The synthetic wood pulp further comprises an organic, polymeric material. Preferred polymeric materials are polyolefins, such as polypropylene, polyethylene and blends thereof, as well as copolymers thereof. Polyethylene may be used in any of its known versions, from low density (LLDPE) to high density (HDPE).

Preferably, the synthetic wood pulp comprising the fibrids incorporating an inorganic filler have a specific surface area of at least 10 m²/g, more preferably at least 11 m2/g, and preferably less than 30 m2/g, such as less than 20 m2/g, for instance in the range of 12 to 18 m2/g, as measured by nitrogen adsorption based on the BET-isotherm. It was identified experimentally that the synthetic wood pulp in accordance with the invention has a higher specific surface area than commercially available synthetic wood pulp for use in fiber cement. This higher specific surface area is deemed beneficial for distribution and anchoring of the fibrids into the fiber cement composition. It is believed that the slightly higher porosity would confirm such better distribution of the fibrids into the fiber cement composition.

By further preference, the synthetic wood pulp comprising such fibrids has a particle size distribution as measured by sieving in accordance with Tappi T233-15 standard, wherein at least 40wt%, and more preferably at least 50wt% has a length larger than 0.60 mm. More preferably, the median (d50, based on weight%) is in the range of 0.50-0.70 mm, such as between 0.55-0.65 mm. By further preference at least 15 wt%, preferably at least 20wt% and at most 40wt%, preferably at most 30wt% has a length of at least 1.0mm.

In one further embodiment, the synthetic wood pulp comprises first fibrids and second fibrids, wherein the first fibrids comprise a first inorganic filler in a first polyolefin material and the second fibrids comprise a second inorganic filler in a second polyolefin material. Preferably, the first and the second fibrids differ through at least one of the polyolefin material and the inorganic filler. However, alternatively, merely the content of inorganic filler may be different between the first and second fibrids. Preferably, such synthetic wood pulp is prepared by refining of a blend of said first fibrils and said second fibrils. Such blending at the stage of fibrils seems beneficial to achieve desired optical properties, and to obtain a desired particle size distribution. Notwithstanding this benefit of blending, it is not excluded to include both a first and a second inorganic filler into an initial mixture, such as a mixture for cast extrusion of a film.

In a further embodiment, the fibrids are used in a wood pulp mixture further comprising (refined) cellulose pulp. An addition of cellulose to a fibril composition during the preparation of the fibrids may be beneficial for the stability and efficiency of the preparation process. It is not deemed strictly necessary that such cellulose, preferably in the form of cellulose fibers or cellulose pulp, is added in the very beginning of the preparation process. Rather it could be added prior to one of the steps in the process, such as a final refinement step. It is deemed advantageous that such cellulose or cellulose pulp is present in an amount of up to 50 weight% based on the dry weight of the synthetic wood pulp, more preferably up to 30 weight%, such as 10-25 weight%.

In one embodiment, the fibrids are present in the fiber cement product in an amount of up to 10 weight% based on dry weight of the fiber cement product, and more preferably of up to 6 weight% or even up to 5 weight%. Preferably, the organic content of fibrids in the fiber cement product is up to 5 weight% based on dry weight, more preferably up to 3 weight%, for instance in the range of 0.5-2.5%, or by further preference 1.0-2.0%, all weight% based on dry weight of the fiber cement product. For sake of clarity the fiber cement product referred to as the basis for the concentrations is a fiber cement sheet as produced in a fiber cement line, prior to coating and assembly. It is essentially the fiber cement composition of this sheet.

In a further embodiment, the synthetic wood pulp is used for manufacturing an air-cured fiber cement product, further comprising synthetic fibers. The resulting air-cured fiber cement product thus comprises fibrids comprising an inorganic filler. Preferred synthetic fibers include polyvinyl alcohol, polyacrylonitrile, polypropylene, polyamide, polyester, polycarbonate. Synthetic fibers are preferably present in an amount of 0.1-5 weight% based on dry weight of the fiber cement composition. Preferably, synthetic fibers are present in an amount between 0.5 to 4 weight % of synthetic fibers, such as more particularly between 1 to 3.5 weight % of synthetic fibers, such as most particularly between 2.5 to 3.5 weight % of synthetic fibers with respect to the total weight of the fiber cement product.

A particularly preferred synthetic fiber is an aramid fiber. The aramid fibers are preferably para-aramid fibers. Aramid fibers and para-aramid fibers, as well as their chemical structure and feasible variations are known per se in the art. They are aromatic amide polymers. Para-aramids are chemically p-phenylene terephthalamides (PPTAs). Para-aramid fibers are for instance commercialized under the trade names Technora^{™}, Kevlar^{™}, Nomex^{™} and Twaron^{™}. More preferably, the used para-aramid fibers are of the copolyamide type. A preferred aramid fiber of the copolyamide type is a reaction product of p-phenylene diamine (PPD) and 3,4'-diaminodiphenylether (3,4'-ODA) with terephthaloyl chloride (TCI). This type is commercialized under the trade name Technora^{™} by Teijin Aramid. In one further embodiment, a mixture of aramid fibers, such as para-aramid fibers is used. For instance, a mixture of different types of aramid fibers may be applied. Alternatively or additionally, a mixture of one type of aramid fibers, such as para-aramid fibers of the copolyamide type of different fiber diameter may be applied. A para-aramid fiber is preferably applied in a weight% of 0.1 to 2 weight% based on dry weight, for instance in the range of 0.15-1.0 weight% or even 0.2-0.6 weight%. The para-aramid fibers are more preferably present in combination with at least one further fiber, such as a synthetic fiber and/or a cellulose fiber.

In a preferred embodiment, the air-cured product further comprises an organic processing fiber, such as a cellulose fiber, for instance in an amount between 1 to 5 weight %, such as particularly between 2 to 4 weight % with respect to the total weight of the fiber cement product. These cellulose fibers may be derived from wood or annual plants. The wood pulp may be chosen from softwood and/or hardwood sources, and preferably is a chemical wood pulp, such as Kraft pulp and/or sulfite wood pulp. In a preferred embodiment, the organic processing fibre comprises, or consists of, unbleached or bleached chemical wood pulp, or mixtures of both.

Furthermore, the cellulose fiber may be refined prior to their addition to a fiber cement composition. In one suitable embodiment, the cellulose fiber may be refined. Thereafter, the cellulose preferably has a fiber length of at least 1.5 mm, preferably at least 2.0 mm, more preferably at least 2.5 mm, when measured using Valmet FS5 fiber analysis apparatus. If the fibre length is too short, the amount of picked-up slurry becomes smaller and eventually too small for efficient manufacturing. The fineness may be selected over a broad range, from 10 to 80, such as from 10 to 40, preferably 15 to 30, or from 35 to 75. The cellulose content in fiber cement products is typically up to 10wt%. In case that cellulose fibers are combined with synthetic fibers, the cellulose content may be lowered to well below 5wt%.

In further particular embodiments, additional fibers may be added to the fiber cement slurry or composition and may be selected from the group consisting of glass fibers, rockwool fibers, slag wool fibers, wollastonite fibers, basalt fibers, ceramic fibers and the like. Use of such inorganic fibers provides the option of increasing the fiber content without increasing the organic content of the fiber cement product. Suitably, use is made of inorganic fibers with a length of less than 20 mm, for instance less than 16 mm, more preferably less than 12 mm, or even below 10 mm. The inorganic fibre may be chopped or milled inorganic fibre, and preferably is chopped inorganic fibre. An advantage of chopped fibre is the narrower size distribution. Preferred additional, inorganic fibers are chosen among basalt fibers and alkaline-resistant (AR) glass fibers. Glass fibers and basalt fibers however tend to render fiber cement products more brittle, resulting in a lower E-modulus, and lower dMOR (maximum deformation in a bending test). The fibrids of the present invention may contribute to providing sufficient flexibility without significant reduction of fire resistance.

The fiber cement composition of the air-cured fiber cement product may further comprise one or more additives and ingredients as conventionally known, such as calcium carbonate and/or other carbonates, calcium silicate and/or other silicates, amorphous silica, mica, pigment, fly ash, clay, furnace slag perlite and/or other low-density ingredients as known per se to the skilled person. Additives such as a hydrophobic agent and/or process aids including surfactants may further be present in the fiber cement composition.

The cement in the fiber cement composition is preferably Portland cement, such as Portland cement type I, type II. However, the use of an alternative type of cement is not excluded, such as gypsum cement or the like. The amount of - fresh - cement in an air-cured fiber cement composition is suitably from 50 to 97 weight% based on dry weight of the composition. More preferably, the amount of fresh cement is in the range of 55 to 90 weight%, such as from 60 to 80 weight%. In addition to fresh cement, cured cement powder may be added. Such cured cement powder is obtained by recycling of waste material, such as production waste, waste obtained from installation and waste from demolition, return and/or recycling of used fiber cement products. In case of autoclave-cured fiber cement products, the fiber cement composition typically from 20 up to 40wt% cement and up to 50wt% silica (SiO2), which will react during the autoclave curing to form desired calcium silicates such as tobermorite.

The fiber cement composition may be manufactured in known manner, using any known manufacturing technology, including include the Hatschek process, Magnani process, injection, flow-on and casting and others. In particular embodiments, the fiber cement products of the present invention are provided by using the Hatschek process. Herein, a green, uncured fiber cement sheet may be produced including the steps of:
(i) building a fiber cement film on a sieve, which sieve rotates so as to be in contact with a fiber cement slurry in a vat;
(ii) transferring the fiber cement film from the sieve to the felt transport belt, and
(iii) accumulating the fiber cement film on an accumulator roll via the felt transport belt.

Herein, the use of the term "fiber cement film" refers to such a thin layer of fiber cement being applied onto the felt transport belt by a sieve rotating in a fiber cement slurry that is present in one or more vats of the Hatschek process. As may be understood from the aforementioned, series of fiber cement films are produced on the one or more sieves from the Hatschek machine and subsequently superimposed and transferred from the one or more sieves to the transport belt, resulting in one or more uncured Hatschek fiber cement layers after accumulation on an accumulation roll. One single fiber cement film conventionally has a thickness of between about 0.01 mm and about 0.9 mm, such as in particular between about 0.05 mm and about 0.5 mm, such as between about 0.1 mm and about 0.4 mm, such as about 0.3 mm. (i.e. one thin layer of fiber cement also called a mono-layer, a single layer or a primary layer, that is applied onto the felt transport belt by a sieve from a vat of the Hatschek process).

In the event that a high density product is desired, the "green" or uncured fiber cement product may be post-compressed usually at pressures in the range from about 22 to about 30 MPa. A high density fiber cement product is known to have a density of at least 1.5 kg/dm³. Due to the compression, a high density fiber cement product is characterized by higher strength and lower water absorption than a medium fiber cement product (1.2-1.5 kg/dm³) or low-density fiber cement product (below 1.2 kg/dm³, typically for interior use).

Furthermore, the green product may be shaped so as to arrive at any desired shape, including corrugated sheets and/or tubes or other articles. Following curing, the fiber cement product may further be treated in a variety of ways, including a mechanical treatment such as embossing, sanding and/or abrasive blasting, and/or the application of grooves and/or other assembly features, for instance at side edges; the application of one or more coatings and/or digital prints; any surface treatment including hydrophobation. A further treatment of the air-cured fiber cement product is a carbonation step in a carbonation chamber, such as specified in the application WO2020/99597A1. This may be useful for reduction of efflorescence.

Instead of an air-cured fiber cement product, the fiber cement product may be autoclave-cured or carbonation-cured. In the event of autoclave-curing, the fibrillated microfibers preferably comprises polypropylene, which has a higher melting point than polyethylene and is more able to withstand autoclave-curing conditions. Preferred fiber cement compositions for autoclave curing is specified hereinabove. A suitable cement composition for carbonation curing is for instance known from WO2016/054602A1. These are carbonatable calcium silicate cements and are comprised of discrete calcium silicate phases, which react with CO2. The main reactive phases are CS (wollastonite or pseudowollastonite), C3S2 (rankinite) and (bellite or larnite or bredigite). The C2S phase present within the calcium silicate composition may exist as (Ca_{y}Mg(SiO₄)₄) (bredigite) or as any of α-Ca2SiO4, β-Ca2SiO4or γ-Ca2SiO4 polymorph or combination thereof. The carbonatable calcium silicate cement may additionally have a reactive amorphous phase of varying composition. Such carbonatable calcium silicate compositions may also include small quantities of residual CaO (lime) and SiO₂(silica) from raw materials after sintering. The calcium silicate composition may also include small quantities of C3S (alite, Ca3SiO5). Carbonatable calcium silicate compositions may additionally include quantities of inert phases (i.e., non-carbonatable under typical carbonation conditions) such as melilite type minerals (melilite or gehlenite or akermanite) with the general formula (Ca,Na,K)₂[(Mg, Fe<2+>,Fe<3+>,Al,Si)₃O_{y}] and ferrite type minerals (ferrite or brownmillerite or C4AF) with the general formula Ca₂(Al,Fe<3+>)₂O₅.

Fibrids according to the invention may be generated by casting a film by means of extrusion of a mixture of a polymer resin, typically an olefin, and an inorganic filler. This is followed by fibrillation, in which step the formed film splits into parallel fibrils, as specified in US3511901. However, the fibrils resulting therefrom do not meet the requirements needed for use in fiber cement. Therefore, a further step is optionally employed, being a refinement step. Herein, the fibrillated material is refined by subjecting it to a shear field, for instance by means of disc refiners. Such disc refining may be performed in that the fibrillated material is mixed with a liquid into a slurry for refinement. The slurry density may be chosen in dependence on the disc refining tool. For instance, the weight ratio of fibrillated material in the slurry may be in the range of 2 to 70wt%. In one embodiment, also known as low consistency refinement, said weight ratio is below 10wt%. In another embodiment, also known as high consistency refinement, the weight ratio is preferably in the range of 30-60wt%, for instance 40-50wt%. High consistency refinement may be performed without addition of process stabilization aids, such as cellulose pulp. Therefore, it may lead to synthetic wood pulp with a higher content of inorganic material, and hence to better properties for fire resistance.

These and other aspects of the invention will be further elucidated with reference to following examples. It is observed for clarity that an embodiment as discussed hereinabove and/or claimed hereinafter in relation to one aspect of the invention is also applicable to another aspect of the invention.

### EXAMPLES

### Example 1. Preparation of fibrillated fibrids

Fibrillated fibrids were prepared from a cast film. The cast film was prepared by extrusion of a composition comprising polyolefin and an inorganic filler. Compositions of the examples are shown in Table 1. As preparation of the film fibrillation, the cast film may be stripped (longitudinally slitting into tapes) and stretched, for instance up to 500%, and typically uniaxially. It is then fibrillated in known manner. The fibrils were cut to a predefined length such as 6 mm. The thus cutted or chopped fibrils were refined by means of disc refiners. Herein, fibrids were generated out of the fibrils. Thereto, said chopped fibrils, optionally as mixtures of different batches, were mixed with water. The compositions of the resulting synthetic wood pulps comprising the fibrids are shown in Table 2. In a first process option, known as low-consistency refining, the fibrils were mixed with the water, and thereafter refined using two different disc refiners with mutually a different disc pattern and cutting length. 20% cellulose pulp was added for process stability. According to a second process option, known as high-consistency refining, some water is added, for instance around 30 weight% of the total slurry, prior to passing the disc refiners. It is foreseen that fibrils may pass the disc refiner more than once, and/or in several stages. Refining apparatus and the low-consistency and high-consistency refinement processes are known per se from the field of papermaking. An example of a high-consistency refiner is the TX68 twin refiner from Andritz AG, Graz, Austria.

### Table 1 specifies compositions of the extrusion mixture and hence of fibrils

**Table 1**

| Sample | C1 (FT6S3) | C2 (FT4S2) | C3 (FT3S2) | C4 (FT8S1) |
|---|---|---|---|---|
| Polymer(s) | PE, 64wt% | PP, 52wt% and LDPE, 13wt% | PP, 75wt% and PE, 20wt% | LLDPE, 50wt% |
| Filler | CaCO3, 36wt% | CaCO3, 35wt% | TiO2, 5 wt% | CaCO3, 50wt% |

### Table 2 specifies compositions of synthetic wood pulp

**Table 2**

| | Fibril-type 1 | Fibril type 2 | Other | Refinement process |
|---|---|---|---|---|
| F1 | 80%C1 | 20%C3 | | High consistency |
| F2 | 80%C1 | 20%C2 | | High consistency |
| F3 | 100%C4 | | | High consistency |
| F4 | 80%C2 | | 20% cellulose pulp | Low consistency |
| F5 | 80%C1 | | 20% cellulose pulp | Low consistency |
| F6 | 80%C3 | | 20% cellulose pulp | Low consistency |
| F7 | 70%C1 | 30%C2 | | High consistency |
| F8 | 100%C3 | | | High consistency |

### Example 2: characterization of fibrillated fibrids.

Synthetic wood pulp comprising fibrillated fibrids made in accordance with Example 1 were tested for characterization. A reference sample was included for sake of comparison. This reference example is a commercially available synthetic wood pulp sold under the tradename SWP^{®} by Mitsui Chemicals, Japan. Said synthetic wood pulp is a highly fibrillated polyolefin synthetic pulp. A manufacturing method thereof is disclosed in EP0107382B1 as flashing of a polymer emulsion. A particle size distribution of the resulting synthetic wood pulp is shown in Table 3.

**Table 3, all % in weight%**

| Sieve opening | Ref | F1 | F2 |
|---|---|---|---|
| < 0.15 mm | 30% | 14% | 10% |
| 0.15- \0.30 mm | 2% | 0% | 0% |
| 0.30-0.42 mm | 19% | 12% | 18% |
| 0.42-0.60 mm | 20% | 18% | 21% |
| 0.60-1.19 mm | 26% | 48% | 40% |
| > 1.19 mm | 3% | 8% | 11% |

The particle size is essentially the fibrid length of pulp classification with the Bauer-McNett classifier according to Tappi T233-15 method. It is apparent from this Table 3 that the resulting fibrids are longer than the reference fibrids. This is deemed beneficial for the flexural strength of the resulting fiber cement panel.

Surface area of the fibrils was measured on the basis of BET-isotherm method and using nitrogen gas adsorption. Use was made of a Quantachrome Apparatus (Autosorb iQ Station 1) for automated gas sorption. Results were measured for the reference material both before disintegration and after disintegration, and are shown in Table 4

**Table 4 - surface specific area**

| | Ref, without disintegration | Ref, with disintegration | F1 |
|---|---|---|---|
| Slope | 478.6 | 306.7 | 182.2 |
| Intercept | 5.92e+00 | 1.777e+01 | 6.495e+01 |
| Correlation coëfficient | 0.997 | 0.999 | 0.992 |
| C constant | 81.8 | 18.3 | 3.8 |
| Surface area (m²/g) | 7.19 | 10.73 | 14.09 |

Surprisingly, the surface area of the synthetic wood pulp according to the invention is significantly larger than that of the reference.

### Example 3: Manufacture of fiber cement products

Fiber cement products were manufactured in according with the Hatschek process on a pilot line. The green sheets obtained from the pilot line were compressed with a pressure of 23 MPa to obtain high-density products. These products were pre-cured during 1 night in a climatized room at around 50°C and thereafter cured in ambient conditions during 3 weeks. The fiber cement products were based on a fiber cement composition as shown in Table 5.

**Table 5 - fiber cement compositions of the examples. All % in dry weight%.**

| | A1 (Ref) | A2 | A3 | A4 | A5 |
|---|---|---|---|---|---|
| Cement | 84% | 84% | 84% | 84% | 84% |
| Cellulose fiber | 3% | 3% | 3% | 3% | 3% |
| PVA fiber | 2% | 2% | 2% | 2% | 2% |
| Pigment and filler | 9% | 9% | 9% | 6% | 8% |
| Synthetic wood pulp | 1.9 %, Ref | 2.0 %, F6 | 2.0 %, F7 | 5.0 %, F5 | 3.0 %, F3 |

### Example 4: Mechanical properties of fiber cement products

Mechanical tests were performed on the fiber cement products made. The modulus of rupture (MOR, typically expressed in Pa = kg/m2.s) of each of the samples was measured by making use of a UTS/INSTRON apparatus (type 3345, cel = 5000N). The limit of elastic deformation and the stress at the limit of elastic deformation were measured by making use of a UTS/INSTRON apparatus (type 3345, cel = 5000N) with software Bluehill by Instron (Norm EN12467 and related norms). E-modulus, density and porosity are also obtained by using the same equipment. The obtained values are expressed as percentages relative to the reference.

**Table 6 - mechanical properties of fiber cement products with selected compositions**

| | Air-dry | | | Saturated | | |
|---|---|---|---|---|---|---|
| | A1 (Ref) | A2 | A3 | A1 (Ref) | A2 | A3 |
| SMOR | 100 | 97 | 98 | 100 | 109 | 97 |
| iMOR | 100 | 102 | 88 | 100 | 97 | 95 |
| dMOR | 100 | 106 | 88 | 100 | 89 | 99 |
| E-modulus | 100 | 96 | 107 | 100 | 102 | 104 |

**Table 7 - density and porosity of fiber cement products with selected compositions**

| | Air-dry | | | Saturated | | |
|---|---|---|---|---|---|---|
| | A1 (Ref) | A3 | A3/A1 | A1 (Ref) | A3 | A3/A1 |
| Density (kg/dm³) | 1.85 | 1.82 | 98% | 1.86 | 1.82 | 98% |
| Porosity (%) | 14.6 | 15.1 | 104% | 14.2 | 14.7 | 104% |

### Example 5: Fire resistance properties

Tests were performed in accordance with EN13501-1 (2018): Fire classification of construction products and building elements. This norm refers to EN ISO 1716 for the PCS and to EN ISO 1182 for other parameters. The tested parameters include PCS, which is defined as a building products caloric value in MJ/kg. The crucible method was used without benzoic acid. The ΔT*_{f}* is the temperature difference. The FL is sustained flaming, indicated the time that a specifically defined flame persists on or over the surface of a test specimen. Δm is the weight loss. Results are shown in Table 8

**Table 8 - fire resistance in accordance with EN 13502:1**

| test | PCS (MJ/kg) | ΔT*_{f}* (°C) | FL (s) | Δm (%) |
|---|---|---|---|---|
| A1 (Ref) | 1.65 | 97 | 468 | 14.8 |
| A4 | 1.64 | 119 | 611 | 15.3 |
| A5 | 1.54 | 90 | 292 | 14.5 |

The prepared samples however did not have a corresponding content of fibrids and/or of organic material. In order to make an adequate comparison, sustaining flaming results were recalculated for a 1.9wt% content of organic material (Table 9) and for a 1.9 wt% content of synthetic wood pulp (Table 10). In the calculations underlying Table 9, the assumption is made that the sustained flaming is proportionate to the organic content of the synthetic wood pulp. In the calculations underlying Table 10, the assumption is made that the sustained flaming is proportionate to the amount of synthetic wood pulp. The further assumption was made that the sustaining flaming time for a corresponding panel without synthetic wood pulp is 100 seconds

**Table 9 - sustaining flaming time corrected for 1.9wt% organic material in the synthetic wood pulp**

| test | Wt% total synthetic wood pulp | Effective wt% organic material of fibrids | FL (s) as measured | FL (s) corrected for 1.9wt% organic material |
|---|---|---|---|---|
| A1 (Ref) | 1.9 | 1.9 | 468 | 468 |
| A4 | 5 | 3.6 | 611 | 370 |
| A5 | 3 | 1.5 | 292 | 343 |

**Table 10 - sustaining flaming time corrected for 1.9wt% synthetic wood pulp**

| test | Wt% total synthetic wood pulp | FL (s) as measured | FL (s) corrected for 1.9wt% synthetic wood pulp |
|---|---|---|---|
| A1 (Ref) | 1.9 | 468 | 468 |
| A4 | 5 | 611 | 294 |
| A5 | 3 | 292 | 222 |

It can thus be seen that the addition of a filler leads to smaller flaming durations.

The result of 8896 leads to higher FL, but the content of fibrils was therein significantly higher.

The calculated correction is made under the assumption that the FL(s) is only and linearly dependent on the fibril addition. This might not be true, as the air-cured fiber cement further contains PVA fibers as well as cellulose fibers.

## Claims

1. A fiber cement product comprising a fiber cement composition comprising cement, fibers and fibrids, wherein said fibrids comprise at least one inorganic filler.

2. The fiber cement product as claimed in claim 1, wherein the fibrids are based on a polyolefin material.

3. The fiber cement product as claimed in claim 1 or 2, wherein the said inorganic filler is a carbonate material and/or a silicate material and/or a sulfate material.

4. The fiber cement product as claimed in claim 3 wherein said carbonate and/or silicate material are chosen to be alkali or earth alkali materials, such as the sodium, potassium, calcium, magnesium , preferably calcium carbonate.

5. The fiber cement product as claimed in any of the preceding claims, wherein the inorganic filler is present in the fibrids in an amount of 20-70 wt% based on total weight of the fibrids, preferably between 40-60 wt%.

6. The fiber cement product as claimed in claim 1-5, wherein said fibrids and/or a synthetic wood pulp of said fibrids has a specific surface area of 12-20 m²/g as measured by N₂-adsorption according to BET isotherm.

7. The fiber cement product as claimed in claim 1-6, wherein the said fibrids are present in an amount of 0.1 to 3 weight% based on dry weight of the fiber cement composition.

8. The fiber cement product as claimed in claim 1-7, comprising a second fibrid comprising a second inorganic filler and a second polyolefin material in addition to the - first - fibrid comprising a - first - inorganic filler and a first polyolefin material, wherein the second fibrid differs from the first fibrid through at least one of the inorganic filler and the polyolefin material.

9. The fiber cement product as claimed in claim 1-8, wherein said fibrids are fibrillated fibrids and obtained by refinement of fibrils fibrillated from a film.

10. The fiber cement product as claimed in any of the preceding claims, wherein the fibers comprise synthetic fibers and wherein preferably the cement is present in an amount of 60-95 weight% based on dry weight of the fiber cement composition.

11. The fiber cement product as claimed in claim 9, wherein said synthetic fibers comprise aramid fibers.

12. Use of a synthetic wood pulp comprising fibrids comprising at least one inorganic filler in the manufacture of a fiber cement product, particularly as claimed in any of the claims 1-10.

13. A synthetic wood pulp comprising fibrillated fibrids comprising an inorganic filler and having a specific surface area of at least 11 m²/g, as measured by N₂-adsorption according to BET method, and preferably having a specific surface area in the range of 12-20 m²/g.

14. The synthetic wood pulp as claimed in claim 12, which is obtainable with the method of claim 14

15. A method of preparation of synthetic wood pulp, comprising the steps of:
- extrusion of resin filled with an inorganic filler into a film;
- fibrillation of the extruded film into fibrils, and
- Refinement of the fibrils into a synthetic wood pulp comprising fibrillated fibrids.
